# EUROPEAN PATENT APPLICATION

(11) **EP 0 958 771 A1**
(43) Date of publication of application: **24.11.1999**
(21) Application number: 98308942.6
(22) Date of filing: 02.11.1998
(51) Int. Cl.: A47J 31/60, A47J 31/44, A47J 31/06

(54) **Coffee maker**

(30) Priority: 11.05.1998 US 75541
(71) Applicant: Sham, John, Chun, Kuen, Hong Kong (HK); Kunavongvorakul, Kumkit, Thungkru, Ratburana, Bangkok (TH)
(72) Inventor: Sham, John, Chun, Kuen, Hong Kong (HK); Kunavongvorakul, Kumkit, Thungkru, Ratburana, Bangkok (TH)
(74) Representative: Woodward, John Calvin

(57) **Abstract**

A household coffee maker, having a built-in water filter (42) for removing water-borne contaminants which is disposed between a water reservoir (30) and a heater (38) which heats the water and keeps the coffee carafe warm. An indicator (48) is preferably disposed on the cover (28) to signal when the water filter has become saturated with contaminants and requires replacement or cleaning.

## Description

The present invention relates to a coffee maker and, more particularly, to a counter-top coffee maker having an in-line water filter and a water filter aging sensor.

In recent times, the counter-top coffee maker has become increasingly popular. These coffee makers use a simple water heating system to brew coffee. Water is poured into a housing reservoir, generally disposed at the top or rear of the coffee machine, which then comes into contact with a heating coil disposed at the bottom of the coffee maker, where it is heated and flashed into hot water by a spout disposed over a funnel. The hot water is directed into the funnel which contains the ground coffee. The hot water impinges upon the coffee grinds, causing them to release their flavor. A coffee carafe is disposed below the funnel and is heated by a heating coil to keep the brewed coffee warm. The funnel usually contains a paper or metallized filter to prevent the grinds and coffee bitters from dropping into the carafe.

The reason that this type of coffee maker has become so popular is its ability to brew a good cup of coffee fairly quickly and without much effort. However, consumers are becoming increasingly particular about the taste of their coffee; many individuals will often spend considerable sums of money in pursuit of the best coffee blends and the finest beans. Because consumers are so obsessed with obtaining the best coffee, every nuance to bring the best cup of coffee to the table is marketed. For example, special acid-free paper is sold for the funnel, so that the brewed coffee will not be soured by trace amounts of sulfuric add used in paper processing.

It has recently been realised that despite all of the efforts of the individual to make the best coffee, the final result is greatly dependent upon the local water used in the coffee maker. Tap water in many areas is contaminated with traces of metal and other impurities that impart a poor taste to the brewed coffee. Not every household has water purification devices to clean the water of these unwanted contaminants.

The present invention has, as one of its objectives, to provide a coffee maker that has a built-in water filter, the filter of which is conveniently disposed in the water reservoir ahead of the heating coil. Water passing from the reservoir to the heating coil must therefore pass through the built-in filter thus leaving behind any water-borne impurities.

According to the invention there is provided a coffee maker comprising a house carrying reservoir for receiving water for brewing coffee, heating means for heating water received from said reservoir in order to brew coffee, means for transferring water from said reservoir to said heating means, a funnel for containing coffee to be brewed, means for transferring the heated water from the heating means to said funnel characterised by a water filter disposed between said reservoir and said heating means for removing water-borne contaminants from the water passing therethrough.

The built-in filter eventually becomes saturated with the contaminants and will therefore require replacement or cleaning. One of the problems associated with replacing the in-line filter is determining when a new filter is needed. Normally, an expensive photo-sensor would be required to detect the change in color of the contaminant-saturated filter. The cost of such a sensor would be prohibitive in a household appliance.

An average filter will last long enough to brew a predetermined number of pots of coffee, depending upon the purity of the tap water being used. Therefore, an easy way to determine when the filter needs replacement is to count the number of times the water-filling lid has been opened. The preferred coffee maker of the invention therefore includes a counter as a filter age indicator. Filter replacement can then be indicated dependent on the number of times the lid has been opened or based on a predetermined number of openings.

In a preferred embodiment, the coffee maker comprises a housing having a base for supporting a coffee carafe and a funnel disposed over the coffee carafe. The housing contains a water reservoir which is filled with water that passes to the heating coil, where it is caused to heat and rise. The heated water is then flashed into hot water by a spout disposed atop a funnel. The hot water from the spout is directed into the funnel. The funnel contains ground coffee. The hot water from the spout impinges upon the ground coffee causing it to release its flavor to the heated water, which then passes into the carafe below. The water filter for removing water-borne contaminants is disposed between the heating coil in the base and the water reservoir. The reservoir includes a lid, which can be opened to receive the water used to brew the coffee. A filter age indicator containing a counter is disposed upon the housing adjacent the lid. A lever system, operatively connected to the lid, trips a gear associated with the counter every time the lid is raised. This causes the counter to advance one unit. After a predetermined number of units has been counted the indicator signals the coffee operator to replace or clean the water filter.

The present invention provides an improved household coffee maker for brewing a good pot of coffee having a built-in water filter for purifying the water used to brew the coffee.

A preferred embodiment of the invention will now be described, by way of example only, with reference to the accompanying drawings in which:
Figure 1 is a sectional side view of a coffee maker of the invention along lines B-B of Figure 4 below;
Figure 2 is a sectional rear view of the coffee maker along lines A-A of Figure 4;

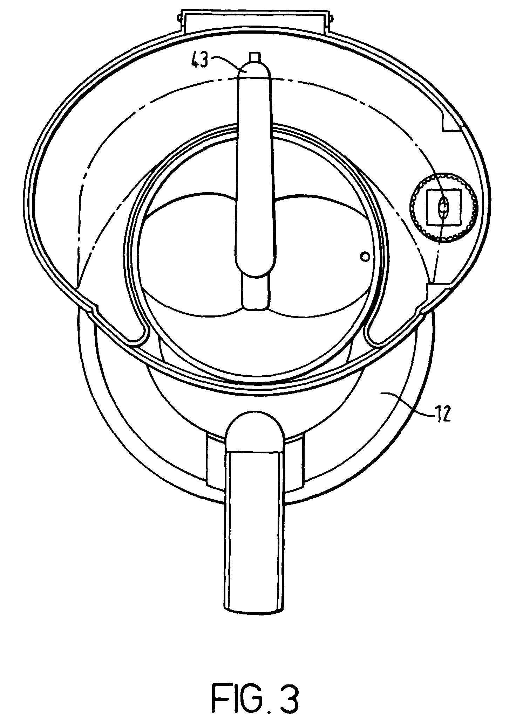

Figure 3 is a top view of the coffee maker of Figure 1 without its top cover;
Figure 4 is a top view of the coffee maker of Figure 1 showing its top cover, and
Figure 5 is a plan view of the carafe of the coffee maker of Figure 1.

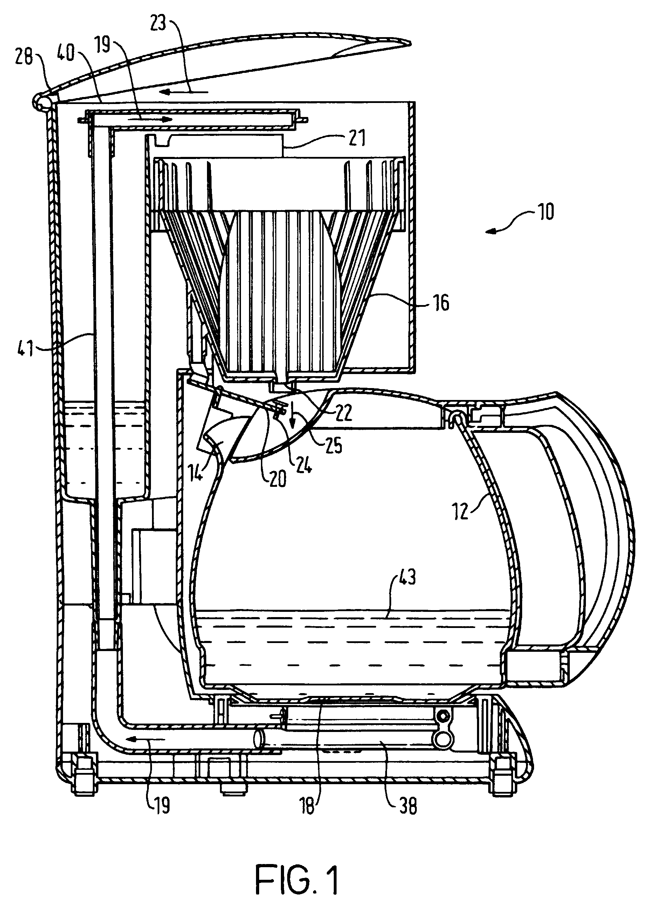

Now referring to Figure 1, there is illustrated a coffee maker 10 of this invention. The coffee maker 10 is in many respects a standard design. One of the exceptions to the standard is the unusual domed-shape carafe 12, which receives brewed coffee (not shown) directly into its pouring spout 14 from funnel 16 disposed above it which contains ground coffee. The shape of the carafe 12 resembles a teapot. Placing the carafe 12 upon the heating plate 18 of the coffee maker 10 causes a spring-biased lever 20 to move backwardly. The lever 20 comprises a water stopper 24 that is caused to move up and down in the direction of arrows 25 when the lever 20 is actuated. Movement of the water stopper 24 away from the funnel 16 allows brewed coffee to issue from the orifice 22 in the funnel 16 into the mouth of the spout 14 disposed directly below it.

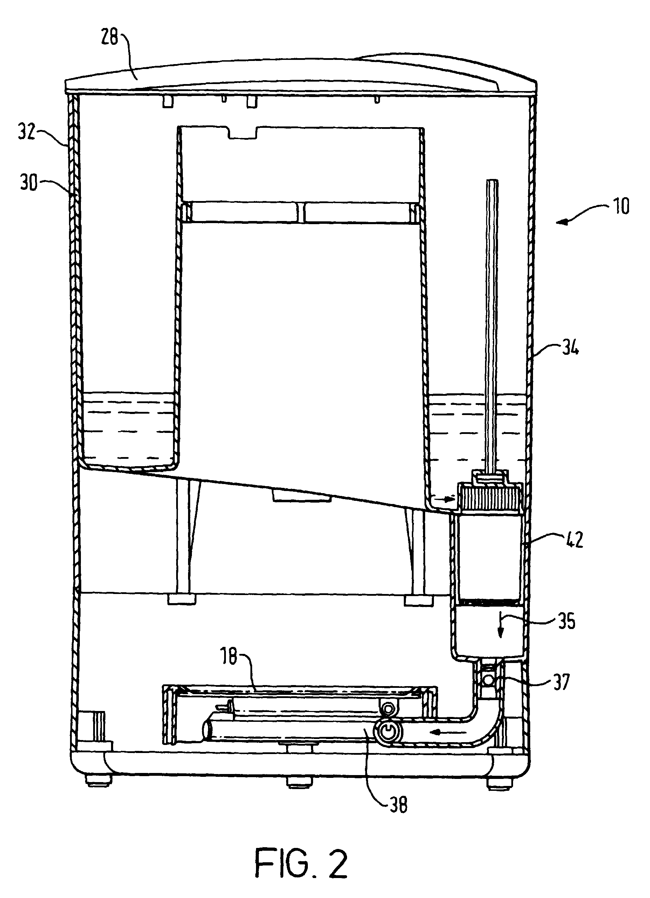

It can be seen from Figure 2 that the coffee maker 10 has a top cover 28 which can be opened to provide access to a water reservoir 30 disposed in housing 32. Tap water is poured into the reservoir 30, in the direction of the arrows 23 (Figure 1). A see-through portion of the reservoir 30 includes a water level indicator 34. Water 36 disposed in the reservoir 30 flows in the direction of arrows 35 (Figure 2) to the heating coils of a heater 38 disposed below heating plate 18. The water 36 enters the heater 38 through a check valve 37 and is heated by the heating coils of the heater 38. It then rises in the direction of arrows 19 (Figure 1) through the conduit 41 to enter a water spout 40, where it flashes into hot water and is directed downwardly in the direction of arrows 21 (Figure 1) into funnel 16. The funnel 16 contains ground coffee, which is impinged upon by the hot water. The coffee then releases its flavor to the heated water. The brewed coffee 43 then drips into the carafe 12 disposed below it.

Disposed between the reservoir 20 and the heater 38 is an in-line water filter 42 (Figure 2) which removes water-borne contaminants from the tap water.

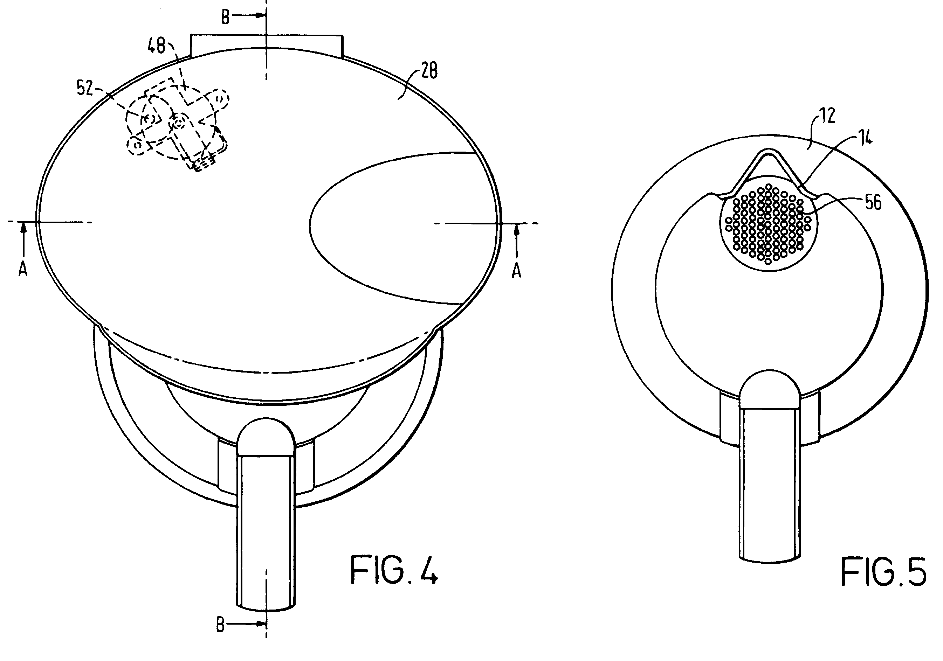

Referring to Figure 4, the top cover 28 is shown in more detail and comprises a filter age indicator 48, which is used to signal to the coffee operator that the filter 42 has become old and requires replacement or cleaning. Normally, the filter 42 will become discolored by the contaminants in the water, which can be observed in the see-through portion 34 of the reservoir 30. However, such discoloration is not always uniform, thus requiring the operator to make an educated guess.

The preferred coffee maker of this invention, therefore, provides an additional filter age indicator which includes a counter 48 which indicates when water has passed through the filter 42 a predetermined number of times. This number is also related to the number of times the top cover 28 is opened to pour the tap water 36 into the reservoir 30. A lever system is attached to the top cover 28 which is, in turn, attached to a gear wheel (not shown), which is part of the unit counter. The filter age indicator 48 signals when the filter 42 needs replacement, based on the counter reaching a predetermined count. A sight window 52 is also provided at the top of the indicator 48 for viewing the counter.

Referring to Figure 5, the carafe 12 is shown in top view. It will be noted that the spout 12 that receives the brewed coffee 42 from orifice 22 in the funnel 16 has a built-in filter 56, designed to catch any grounds that accidentally or inadvertently fall through the paper or metallized filter used to hold the coffee grounds within the funnel 16.

It will be seen from the foregoing that the invention provides an improved household coffee maker having a built-in water filter for removing water-borne contaminants. The water filter is disposed between the water reservoir and the heating coil, which heats the water and keeps the coffee carafe warm. The preferred indicator disposed upon the cover of the coffee maker signals when the water filter has become saturated with contaminants and requires replacement or cleaning.

## Claims

1. A coffee maker comprising:
a reservoir (30) for receiving water for brewing coffee;
heating means (38) for heating water received from said reservoir in order to brew coffee;
means (37) for transferring water from said reservoir to said heating means; and
means (40,41) for transferring the heated water from the heating means (38) to a funnel (16) for the coffee;
**characterised by**
a water filter (42) disposed between said reservoir (30) and said heating means (38) for removing water-borne contaminants from the water passing therethrough.

2. The coffee maker of claim 1, characterised in that a cover (28) is disposed over the reservoir (30), said cover having means for introducing water into the reservoir (42) and indicator means (48) for indicating the need for replacing or cleaning the water filter (42).

3. The coffee maker of claim 2, characterised in that the cover (28) includes a viewing window (52) to observe the indicator (48).

4. The coffee maker of any preceding claim, characterised in that the top cover (28) is movable and counting means are disposed adjacent said lid and operably connected thereto for determining how often said lid is opened to access said reservoir.

5. The coffee maker as claimed in any preceding claim, characterised by a see-through portion for observing the water level in the reservoir.

6. The coffee maker of claim 5, characterised in that the see-through portion contains the water filter (42).

7. The coffee maker of any of claims 4-6, characterised in that the counting means includes means for adjusting the count required to determine whether the water filter (42) needs replacing.

8. The coffee maker of any preceding claim, characterised by a carafe (12) with a pouring spout (14) for receiving brewed coffee from the funnel (16).

9. The coffee maker of claim 8, characterised in that the carafe (12) has a substantially teapot shape.

10. The coffee maker of claim 8 or claim 9, characterised by a spring-biased, movable lever disposed adjacent the funnel (16), the carafe (12) moving the lever to release brewed coffee from the funnel (16) when disposed upon the heating means (38).

11. The coffee maker of claim 1, characterised by filter age indicator means (48) for determining when to clean or replace the water filter (42).

12. The coffee maker of claim 11, characterised by a cover (28) disposed over the reservoir (30), said cover having means for introducing water into the reservoir and carrying the filter age indicator means (48).

13. The coffee maker of claim 12, characterised in that the filter age indicator means (48)comprises counting means disposed adjacent the top cover (28) operably connected thereto for determining how often said top cover is opened to access the reservoir (30) and hence for determining whether said water filter needs replacing.
